# FASCICULE DE BREVET EUROPEEN

(11) **EP 0 644 231 B1**
(45) Date de publication et mention de la délivrance du brevet: **02.01.2002**
(21) Numéro de dépôt: 94420252.2
(22) Date de dépôt: 21.09.1994
(51) Int. Cl.: C08K 3/00, C08K 3/32, C08K 13/02

(54) **Système accélérateur de réticulation de polymères durcissant à l'humidité de l'air**
Vernetzungs-Beschleuniger für RTV-Polymere
Crosslinking accelerator system for RTV polymers

(30) Priorité: 22.09.1993 FR 9311263
(43) Date de publication de la demande: 22.03.1995
(73) Titulaire: RHODIA CHIMIE, 92408 Courbevoie Cédex (FR)
(72) Inventeur: Letoffe, Michel, F-69110 Sainte-Foy-Les-Lyon (FR); Pujol, Jean-Marc, Princeton Junction, NJ 08550 (US)
(74) Mandataire: Trolliet, Maurice

(56) Documents cités:
- EP-A- 0 117 772
- EP-A- 0 332 785
- EP-A- 0 446 157
- EP-A- 0 548 847

## Description

La présente invention a pour objet un nouveau système accélérateur de réticulation de polymères durcissant à l'humidité par réaction de polycondensation et l'utilisation dudit système pour la fabrication de mastics et d'adhésifs dits "neutres" par réticulation à froid de polyorganosiloxanes à fonction alcoxysilyle ou cétiminoxysilyle.

Les compositions silicones monocomposantes utilisées comme mastics ou adhésifs réticulent à froid suivant un mécanisme d'hydrolyse de fonctions réactives du type acétoxysilane, cétiminoxysilane, alcoxysilane ..., suivi par des réactions de condensation entre des groupements silanols formés et d'autres fonctions réactives résiduelles. L'hydrolyse est généralement effectuée grâce à la vapeur d'eau qui diffuse dans le matériau à partir de la surface exposée à l'atmosphère. Lorsque l'épaisseur dudit matériau est grande, le temps nécessaire pour réticuler la face non exposée peut être important ; ainsi, il faut généralement plus de 100 heures pour réticuler un joint de 10mm d'épaisseur.

Dans certaines applications, comme par exemple les mastics techniques pour vitrages isolants ou les collages pour pièces automobiles, il est important de disposer d'un matériau à prise rapide.
Il a été proposé d'ajouter à des compositions silicones acétoxy (et d'une manière générale acyloxy) réticulant à froid, des accélérateurs de durcissement, notamment du type :
. phosphates anhydres ou hydratés de métaux alcalins ou alcalino-terreux, et ce au moment de l'emploi (US-A-4 508 888) ;
. hydroxydes alcalins ou alcalino-terreux, et ce au moment de l'emploi (US-A-4 532 315) les systèmes les plus efficaces sont les hydroxydes alcalino-terreux, la chaux en particulier, qui réagit avec l'acide acétique libéré par la composition silicone en donnant de l'eau et de l'acétate de sodium ; l'eau produite par la réaction conduit à l'hydrolyse des fonctions acétoxy, ce qui entraîne la formation d'acide acétique en quantité deux fois plus importante que celle de départ ; la réaction continue donc en s'autoaccélérant ; la prise peut ainsi être très rapide.
. hydrogels à base de polymères organiques gonflés par de l'eau, et ce au moment de l'emploi (US-A-4 918 121) ;
Il a aussi été proposé (EP-A-372 347) d'accélérer les compositions silicones acétoxy par addition d'un système à base d'une émulsion d'eau dans une huile silicone.
Il est également connu (brevet britannique 1 308 985) d'utiliser des tamis moléculaires pour contrôler la vitesse de réticulation des compositions élastomères silicones acétoxy.

Il est des domaines d'application où les compositions silicones durcissables neutres (c'est-à-dire non acyloxy) sont préférées aux compositions acides (c'est-à-dire acyloxy) ; c'est le cas notamment en ce qui concerne l'obtention :
. de revêtements sur métaux tels que fer, zinc, cuivre ... ou sur verres traités, qui se corrodent au contact des acides ;
. de revêtements sur béton, où l'on constate la formation d'efflorescence ;
. de joints pour boîtiers renfermant un appareillage électronique sensible aux acides.

Pour toutes ces applications, il peut être intéressant de disposer de compositions silicones durcissables neutres à prise rapide.

Il a été constaté que l'augmentation de la quantité de catalyseur dans les compositions silicones durcissables neutres n'a que peu d'influence sur la vitesse de réticulation en profondeur. Par contre l'addition d'eau libre à la formulation provoque une forte accélération au départ de la réticulation, mais conduit à un élastomère mou et collant, donc incomplètement réticulé ; l'addition d'eau libre et l'augmentation simultanée de la concentration en catalyseur conduisent au même résultat.

D'autre part il a été constaté que les élastomères obtenus à partir de systèmes silicones à réticulation rapide, présentent généralement une adhérence inférieure à celle des élastomères provenant de systèmes silicones à réticulation lente. Il est également connu que les catalyseurs à base d'étain ne sont généralement pas stables en présence d'eau.

Il a été proposé (US -A-4 918 140) d'accélérer les compositions silicones neutres (cétiminoxy) par addition à une partie (A) renfermant les silicones à réticuler, d'une partie (B) contenant un hydrogel de polymère organique gonflé par de l'eau ; un tel mélange doit être soigneusement homogéneisé, car seule la partie (A) est susceptible de réticuler à l'humidité atmosphérique ; en outre le matériau final est collant car insuffisamment réticulé.

La demanderesse a maintenant trouvé un système accélérateur de réticulation à froid des polymères durcissant à l'humidité, notamment des compositions élastomères silicones neutres, ledit système étant stable dans le temps et permettant d'obtenir des mastics ou des adhésifs présentant une adhérence voisine de celle des compositions élastomères silicones neutres à réticulation lente.

Ledit système accélérateur peut également être mis en oeuvre pour accélérer le durcissement de polyesters ou de polyéthers à fonctions alcoxysilanes ou de polyuréthanes.

Ledit système accélérateur de réticulation à froid de polymères durcissant à l'humidité par hydrolyse/condensation, est caractérisé en ce qu'il comprend :
- (C) x parties en poids d'un catalyseur de réticulation desdits polymères par polycondensation, x allant de 0,01 à 10, de préférence de 0,1 à 5, ledit catalyseur étant pris dans le groupe formé par : les sels d'organoétain d'acides carboxyliques, les produits de réaction des sels d'organoétain d'acide carboxyliques avec les esters titaniques, les chélates d'étain, les esters titaniques et zirconiques et les octoates d'étain, zinc ou plomb ;
- (E) Y parties en poids d'au moins un composé minéral solide contenant une quantité y d'eau sous forme d'eau d'hydratation et/ou adsorbée par condensation capillaire, cette quantité y allant de 0,5 à 40 parties en poids, de préférence de 3 à 20 parties en poids, et pouvant représenter jusqu'à 70 % du poids dudit composé minéral solide, ledit composé minéral solide étant pris dans le groupe formé par : un aluminosilicate cristallin hydraté de métal alcalin ou alcalino-terreux ; un gel de silice hydraté ; un sel minéral hydraté contenant de l'eau de cristallisation consistant dans Na₂B₄O₇, 10 H₂O contenant 47 % en poids d'eau, Na₂HPO₄, 12 H₂O contenant 60 % en poids d'eau et Na₂CO₃, 10 H₂O contenant 63 % d'eau ; et un mélange de ces composés minéraux solides ;
- (F) z parties en poids de charges, z allant de 0 à 50, de préférence de 1 à 30 ;
- (D) 100 -(x+Y+z) parties en poids d'un diluant ou d'un solvant dudit catalyseur (C), diluant ou solvant présentant une viscosité dynamique à 25°C de l'ordre de 50 à 200.000 mPa.s ;
   les quantités respectives des quatre constituants (C), (E), (F) et (D) étant telles que le système obtenu se présente sous forme d'une pâte manipulable.

Parmi les catalyseurs de réticulation (C) pouvant être mis en oeuvre, on peut citer en particulier :
- les sels d'organoétain d'acides carboxyliques tels que par exemple l'éthyl-2 hexanoate d'étain, le diacétate de dibutylétain, le dilaurate de dibutylétain (un certain nombre de ces catalyseurs, sont décrits dans l'ouvrage de NOLL intitulé "Chemistry and technology of Silicones", pages 397, 2^{ème} § - Academic Press 1968),
- les produits de réaction des sels d'organoétains d'acides carboxyliques avec les esters titaniques tels que décrits dans le brevet US-A-3.403.753,
- les chélates d'étain tels que décrits dans le brevet EP-B-147.323,
- les esters titaniques et zirconiques tels que décrits dans le brevet US-A-4.525.565.
A propos des composés minéraux solides (E) pouvant contenir jusqu'à 70 % de leurs poids d'eau d'hydratation et/ou adsorbée par condensation capillaire, on précisera que :
- les aluminosilicates cristallins hydratés de métaux alcalins ou alcalino-terreux (appelés aussi zéolites et tamis moléculaires) se présentent sous forme d'un réseau cristallin contenant des cavités interconnectées d'ouverture uniforme, formant des pores susceptibles d'adsorber des quantités importantes d'eau ; on peut citer notamment les zéolites 4A contenant de 4 à 22 % en poids d'eau ;
- les gels de silice hydratés ont une structure microporeuse pouvant retenir des quantités importantes d'eau (par exemple jusqu'à 22 % en poids) par condensation capillaire.

Parmi les diluants ou solvants (D) dudit catalyseur (C) de réticulation, on peut citer :
- les α,ω-bis(triorganosiloxy)polydiorganosiloxanes formés essentiellement de motifs diorganosiloxy et d'au plus 1 % en poids de motifs monoorganosiloxy et/ou siloxy, les radicaux organiques liés aux atomes de silicium étant choisis parmi les radicaux alkyle en C₁-C₈, vinyle, phényle, 40 % au moins en poids de ces radicaux étant des radicaux méthyle et 10 % au plus étant des radicaux vinyle ;
- les hydrocarbures aliphatiques, cycloaliphatiques, aromatiques, halogénés ou non, tels que par exemple le n-heptane, le n-octane, le cyclohexane, le méthylcyclohexane, le toluène, le xylène, le mésitylène, le cumène, la tétraline, le perchloroéthylène, le trichloroéthane, le tétrachloroéthane, le chlorobenzène, l'orthodichlorobenzène ;
- les cétones aliphatiques et cycloaliphatiques telles que par exemple la méthyléthylétone, la méthylisobutylcétone, la cyclohexanone, l'isophorone ;
- les esters tels que par exemple l'acétate d'éthyle, de butyle, d'éthylglycol.

Les charges (F) peuvent être de nature organique (par exemple poudre de polychlorure de vinyle, de polyéthylène) ou de préférence de nature minérale.

Ces charges minérales peuvent se présenter sous la forme de produits très finement divisés, de diamètre moyen inférieur à 0,1 µm, tels que des silices de combustion ou de précipitation de surface spécifique généralement supérieure à 40 m²/g, ou sous la forme de produits grossièrement divisés, de diamètre moyen supérieur à 0,1 µm, tels que le quartz broyé, les silices de diatomées, le carbonate de calcium, l'argile calcinée, le noir de carbone, l'oxyde de titane de type rutile, les oxydes de fer, de zinc, de chrome, de zirconium, de magnésium, les différentes formes d'alumine, le nitrure de bore, le lithopone, le métaborate de baryum, de surface spécifique généralement inférieure à 30 m²/g ; elles peuvent éventuellement être modifiées en surface par les divers composés siliciques habituellement utilisés à cet usage (par exemple organochlorosilanes, organopolysiloxanes, organopolysilazanes mentionnés dans FR-A-1.126.884, FR-A-1.136.885, FR-A-1.236.505, GB-A-1.024.234).

Bien que contenant des catalyseurs hydrolysables, on a constaté que le système accélérateur faisant l'objet de l'invention est stable dans le temps.

Celui-ci est tout particulièrement intéressant pour l'accélération des compositions silicones durcissant à l'humidité de l'air, comprenant en poids :
- (H) 100 parties d'un α,ω-di(hydroxy)diorganopolysiloxane, de viscosité dynamique de l'ordre de 500 à 500 000 mPa.s à 25°C, de préférence de l'ordre de 3 000 à 200 000 mPa.s, constitué d'une succession de motifs diorganopolysiloxy de formule R₂SiO, formule dans laquelle les symboles R, identiques ou différents, représentent des radicaux alcoyles, alcényles ou aryles contenant de 1 à 8 atomes de carbone, de préférence au moins 80 % en nombre desdits radicaux étant des radicaux méthyles ;
- (R) de 2 à 10 parties en poids, de préférence de 4 à 8 parties en poids d'au moins un agent réticulant de formule RSiX₃ ou SiX₄, où R a la définition donnée ci-dessus et X représente un groupe hydrolysable ;
- (C') de 0,005 à 0,5 partie en poids, de préférence de 0,01 à 0,1 partie en poids d'un catalyseur de réticulation par polycondensation ayant la même définition que celle du catalyseur (C) donnée supra ;
- (F') de 0 à 200 parties en poids, de préférence de 3 à 100 parties en poids de charges.

Les α,ω-di(hydroxy)diorganopolysiloxanes (H) sont des produits essentiellement linéaires ; ils peuvent toutefois comprendre jusqu'à 2 % en nombre de motifs RSiO_{1,5} et/ou SiO₂ par rapport au nombre de motifs diorganosiloxy. Les viscosités dynamiques mentionnées ci-dessus sont mesurées à 25°C à l'aide d'un viscosimètre Brookfield selon la norme AFNOR NFT 76102 de février 1972.

Parmi les radicaux hydrocarbonés R on peut citer par exemple les radicaux
- méthyle, éthyle, propyle, trifluoro-3,3,3 propyle, cyclohexyle, cyanoéthyle,
- vinyle, allyle, butényle,
- phényle, chlorophényle.

Il doit être compris, selon une variante de l'invention, que l'on peut utiliser aussi comme polymère (H) des copolymères ou un mélange constitué de plusieurs polymères qui diffèrent entre eux par le poids moléculaire et/ou la nature des radicaux liés au silicium.

L'agent de réticulation (R) présente au moins un groupe hydrolysable tel que :
. acyloxy de formule -O-CO R'
. alcoxy de formule -O-R'
. amino de formule -NR¹R²
. amido de formule -NR¹COR²
. alcényloxy de formule -O-CR¹=CHR²
. aminoxy de formule -O-NR¹R²
. cétiminoxy de formule -O-N=CR¹R² ou 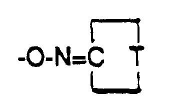
où R' représente un radical alcoyle ou aryle ayant de 1 à 15 atomes de carbone, R¹ et R², identiques ou différents représentent des radicaux alkyle ou aryle contenant de 1 à 8 atomes de carbone et T un radical alkylène contenant de 4 à 8 atomes de carbone.

Parmi les radicaux R', R¹ et R², on peut citer tout particulièrement les radicaux méthyle, éthyle, cyclohexyle, phényle.

Parmi les radicaux T on peut citer tout particulièrement ceux de formule -(CH₂)₄-; -(CH₂)₅- ; -(CH₂)₆-.

Les agents réticulants préférentiellement mis en oeuvre sont les alcoxysilanes et les cétiminoxysilanes.

A titre d'exemple d'alcoxysilanes, on peut citer ceux de formule:
CH₃Si(OCH₃)₃ CH₃Si(OC₂H₅)₃ C₂H₅Si(OCH₃)₃
CH₂=CHSi(OCH₃)₃ CH₂=CHSi(OCH₂-CH₂-OCH₃)₃
C₆H₅Si(OCH₃)₃ CH₃Si(OCH₃)₂OCH(CH₃)-CH₂-OCH₃
Si(OCH₃)₄ Si(OC₂H₅)₄ Si(OC₃H₇)₄

A titre d'exemple de cétiminoxysilanes, on peut citer ceux de formule :
CH₃Si[ON=C(CH₃)₂]₃ CH₃Si[ON=C(CH₃)C₂H₅]₃
CH₂=CHSi[ON=C(CH₃)C₂H₅]₃ C₆H₅Si[ON=C(CH₃)₂]₃
CH₃Si[ON=C(C₂H₅)(CH₂)₃CH₃]₃ (CH₃)₂C=NOSi[ON=C(CH₃)C₂H₅]₃
CH₃Si[ON=C(CH₃)CH(C₂H₅)(CH₂)₃CH₃]₃

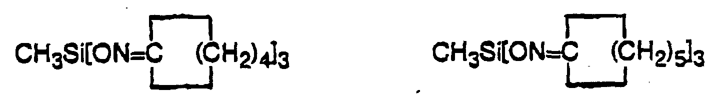

Les agents réticulants acyloxysilanes sont également intéressants.

A titre d'exemple d'acyloxysilanes, on peut citer ceux de formule :
CH₃Si(OCOCH₃)₃ C₂H₅Si(OCOCH₃)₃ CH₂=CHSi(OCOCH₃)₃
C₆H₅Si(OCOCH₃)₃ CH₃Si[OCOCH(C₂H₅)-(CH₂)₃-CH₃]
CF₃CH₂CH₂Si(OCOC₆H₅)₃
CH₃Si(OCOCH₃)₂(OCOH(C₂H₅)-(CH₂)₃-CH₃
CH₃COOSi[OCOCH(C₂H₅)-(CH₂)₃-CH₃]₃

Le catalyseur (C') mis en oeuvre à la même définition que celle du catalyseur (C) présent dans le système accélérateur, mais lesdits catalyseurs (C) et (C') peuvent être semblables ou différents.

Selon une variante de l'invention, ledit catalyseur (C') peut être omis de la composition silicones telle que ci-dessus définie lorsque l'homogénéisation de ladite composition est suffisante ; la quantité de catalyseur (C) dans le système accélérateur devra alors compenser le manque de catalyseur (C').

Les charges (F') pouvant être mises en oeuvre, ont la même définition que celles présentes dans le système accélérateur ; celles-ci peuvent être semblables ou différentes.

Pour une bonne réalisation de l'invention, la quantité de système accélérateur à introduire dans la composition silicone réticulant à froid est telle que la quantité d'eau présente dans la composition finale soit de l'ordre de 0,1 à 4 %, de préférence de 0,3 à 2 % en poids.

La viscosité et la quantité de diluant ou solvant (D) dans le système accélérateur est fonction de la nature et du taux de la charge minérale (F) qu'elle contient éventuellement, ainsi que de la viscosité de la composition silicone à accélérer. La présence ou non de charges (F) et le choix de ces charges est également fonction de la viscosité de la composition silicone à accélérer. Pour une bonne réalisation de l'invention, il est conseillé de mettre en oeuvre un système accélérateur dont la viscosité dynamique à 25°C soit voisine de celle de la composition silicone à accélérer.

L'emploi dudit système accélérateur dans des compositions silicones durcissant à l'humidité de l'air permet d'obtenir des mastics ou des adhésifs de prise satisfaisante, rapide même en épaisseur et de bonne adhérence.

Les compositions silicones durcissant à l'humidité de l'air ci-dessus décrites peuvent en outre contenir des adjuvants additifs usuels, notamment:
- des stabilisants thermiques (notamment les oxydes et hydroxydes cériques) à raison de 0,1 à 12 parties pour 100 parties α,ω-di(hydroxy)diorganopolysiloxane (H) ;
- des composés améliorant la résistance à la flamme (notamment les dérivés organiques et minéraux du platine) ;
- des plastifiants silicones tels que les α,ω-bis(triorganopolysiloxy)polydiorganosiloxanes, de viscosité dynamique d'au moins 10 mPa.s à 25°C, de préférence de 10 à 1000 mPa.s à 25°C, formés essentiellement de motifs diorganosiloxy et d'au plus 1 % en poids de motifs monoorganosiloxy et/ou siloxy, les radicaux organiques liés aux atomes de silicium étant choisis parmi les radicaux méthyle, vinyle, phényle, 40 % au moins en poids de ces radicaux étant des radicaux méthyle et 10 % au plus étant des radicaux vinyle ; ils sont utilisés à raison de 5 à 120 parties en poids pour 100 parties d' α,ω-di(hydroxy)diorganopolysiloxane (H) ;
- des plastifiants organiques tels que les produits d'alkylation du benzène par des oléfines à longues chaînes, de poids moléculaire supérieur à 200, à raison de 0 à 50 parties en poids pour 100 parties d'α,ω-di(hydroxy)diorganopolysiloxane (H) ;
- des composés apportant des propriétés de thixotropie tels que :
   . des polymères méthylpolysiloxanes ramifiés liquides, ayant de 1,4 à 1,9 radical méthyle par atome de silicium et constitués d'une combinaison de motifs de formule (CH₃)₃SiO_{1/2}, (CH₃)₂SiO, CH₃SiO_{3/2} ; ils renferment de 0,1 à 8 % de groupes hydroxyles ; ils peuvent être obtenus par hydrolyse des chlorosilanes correspondants ; ils sont introduits à raison de 3 à 50 parties en poids pour 100 parties d'α,ω-di(hydroxy)diorganopolysiloxane (H) ;
   . des composés siliciques hydroxylés solides à température ambiante tels que par exemple, le diphénylsilanediol, le diméthylphénylsilanediol ; ils sont utilisés à raison de 0,5 à 20 parties en poids pour 100 parties d'α,ω-di(hydroxy)diorganopolysiloxane (H) ;
- des huiles permettant de réduire la viscosité globale telles que les huiles α,ω-di(hydroxy)diméthylphénylpolysiloxanes de viscosité dynamique de l'ordre de 200 à 600 mPa.s, α,ω-di(méthoxy) ou (diéthoxy) diméthylpolysiloxanes de viscosité dynamique de l'ordre de 30 à 2 000 mPa.s ; elles sont utilisées à raison de 2 à 40 parties en poids pour 100 parties d'α,ω-di(hydroxy)diorganopolysiloxane (H).

L'adhérence sur divers support tels que par exemple bois, aluminium, béton, PVC, de l'élastomère formé par durcissement des compositions silicones ci-dessus décrites peut encore être améliorée par ajout pour 100 parties de ladite composition, de 0,1 à 5 parties d'au moins un agent d'adhérence tel que :
- les polysilicates d'alkyle en C₁-C₁₀ (polysilicate de méthyle ou d'éthyle) ;
- les alcoxysilanes de formule ZₙSi(OZ')₄₋ₙ où :
   . Z est un radical hydrocarboné saturé ou insaturé en C₁₋₁₀ contenant éventuellement de l'azote comme hétéroatome,
   . Z' est un radical alkyle en C₁-C₈ ou un radical alcoxyalkylène en C₃-C₈,
   . n est égal à 0 ou 1.

A titre d'exemple on peut citer les alcoxysilanes, vinylalcoxysilanes, les (Δ2-imidazolinyl)alkoxysilanes et aminoalcoxysilanes ;
- le vinyltriméthoxysilane,
- le vinyltris(méthoxyéthoxy)silane,
- le tétra(méthoxyéthoxy)silane,

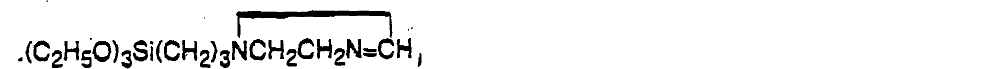

.(C₂H₅O)₃Si(CH₂)₃NH₂,

.CH₃(C₂H₅O)₂Si(CH₂)₃NH₂,

.(CH₃O)₃Si(CH₂)₃NH(CH₂)₂NH₂.

Les compositions silicones durcissant à l'humidité de l'air, contenant ledit système accélérateur faisant l'objet de l'invention sont préparées par simple mélange du système accélerateur aux autres constituants de la composition par exemple par mélange manuel ou à l'aide d'un mélangeur statique, d'une pompe, ou à partir d'une cartouche bicomposante munie d'un mélangeur statique.

Lesdites compositions à durcissement rapide peuvent être utilisées pour de multiples applications comme le jointoiement dans l'industrie du bâtiment, l'assemblage de matériaux, l'isolation de conducteurs électriques, l'enrobage de circuits électroniques, la préparation de moules servant à la fabrication d'objets en résine ou mousse synthétique.

Elles sont tout particulièrement intéressantes pour toute application nécessitant une prise rapide en épaisseur tel que pour l'obtention de joints, notamment de joints "in situ" utilisés dans l'industrie automobile (joints "écrasés", "en forme" ou "injectés"), pour la fabrication de doubles vitrages, de vitrages extérieurs collés ou de joints pour appareil électroménager.

La réticulation complète après ajout du système accélérateur demande environ de 1 à 24 heures.

Les exemples suivants sont donnés à titre illustratif et ne peuvent être considérés comme une limite du domaine ou de l'esprit de l'invention.

### Exemples 1 à 15

On prépare un système accélérateur de réticulation à froid par dispersion dans une huile silicone du composé minéral solide (E) contenant de l'eau sous forme d'eau d'hydratation et/ou adsorbée par condensation capillaire, addition des charges éventuelles (silice, carbonate de calcium) puis du catalyseur à l'étain et mélange.

On obtient ainsi un système accélérateur liquide pâteux.

La nature et les quantités des différents constituants du système accélérateur figurent aux tableaux 1 et 2.

Dans ces tableaux les diverses abréviations ou dénominations ont la signification suivante :
. TM 12% : zéolite 4A en poudre contenant 12% en poids d'eau
. TM 22% : zéolite 4A en poudre contenant 22% en poids d'eau
. gel de silice : Levilite® standard activée 130754 commercialisée par Rhône-Poulenc
. Aqua Keep® : Aqua Keep® X5 T-S (polyacrylate de métal alcalin commercialisé par NORSOLOR, formant un hydrogel par addition d'eau)
. 47 V 30 000 : huile polydiméthylsiloxane de viscosité dynamique à 25°C de l'ordre de 30 000mPa.s.
. 47 V 100 : huile polydiméthylsiloxane de viscosité dynamique à 25°C de l'ordre de 100mPa.s.
. 48 V 3 500 : huile α,ω-di(hydroxy)polydiméthylsiloxane de viscosité dynamique à 25°C de l'ordre de 3 500mPa.s.
. silice : silice AEROSIL® 150 de surface BET de 150m²/g commercialisée par DEGUSSA
. DLDOctSn : dilaurate de dioctyle étain METATIN® 812 commercialisé par ACIMA
. DLDBuSn : dilaurate de dibutyle étain METATIN® 712 E commercialisé par ACIMA

Les performances des systèmes accélérateurs ci-dessus préparés sont testées en présence de compositions élastomères susceptibles de réticuler à froid en présence d'humidité, à raison de 10 parties en poids de système accélérateur pour 100 parties de composition élastomère.

Les systèmes accélérateurs des exemples 1 à 9 ont été testés en présence de la composition élastomère CAF Rhodorseal® 5942 commercialisée par Rhône-Poulenc, composition à base d'une huile α,ω-di(hydroxy)polydiméthylsiloxane de viscosité dynamique à 25°C de l'ordre de 70 000mPa.s., d'un alcoxysilane réticulant, de silanes aminés comme agents d'adhérence, de carbonate de calcium, de silice et d'un catalyseur à l'étain.

Les systèmes accélérateurs des exemples 10 à 12 ont été testés en présence de la composition élastomère Mastic Rhodorsil® 6B commercialisée par Rhône-Poulenc, composition à base d'une huile α,ω-di(hydroxy)polydiméthylsiloxane de viscosité dynamique à 25°C de l'ordre de 70 000mPa.s., de cétiminoxysilanes réticulants, de silanes aminés comme agents d'adhérence, de silice et d'un catalyseur à l'étain.

Le système accélérateur de l'exemple 3 après 18 mois de stockage et celui de l'exemple 13 ont été testés en présence de la composition élastomère Mastic Rhodorsil® N8 commercialisée par Rhône-Poulenc, composition à base d'une huile α,ω-di(hydroxy)polydiméthylsiloxane de viscosité dynamique à 25°C de l'ordre de 50 000mPa.s., de cétiminoxysilanes réticulants, de silanes aminés comme agents d'adhérence, de silice et d'un catalyseur à l'étain.

Le système accélérateur de l'exemples 14 a été testé en présence de la composition élastomère CAF Rhodorseal® 5761 commercialisée par Rhône-Poulenc, composition à base d'une huile α,ω-di(hydroxy)polydiméthylsiloxane de viscosité dynamique à 25°C de l'ordre de 3500mPa. s., d'acetoxysilanes réticulants, de silice et d'un catalyseur au titane.

Le système accélérateur de l'exemples 15 a été testé en présence de la composition élastomère Mastic Rhodorsil® 3B commercialisée par Rhône-Poulenc, composition à base d'une huile α,ω-di(hydroxy)polydiméthylsiloxane de viscosité dynamique à 25°C de l'ordre de 70 000mPa.s., d'acetoxysilanes réticulants, de silice et d'un catalyseur au titane.
La vitesse de réticulation de la composition élastomère en présence du système accélérateur est estimée selon au moins une des trois méthodes suivantes :
- par mesure du temps nécessaire au démoulage d'un joint épais de 10mm ou 6 mm d'épaisseur ;
- en suivant l'évolution au cours du temps de la dureté Shore A (Norme ASTM D 2240 ou ISO R 868) sur les deux faces (face au contact de l'air et face confinée) d'un joint de 10mm d'épaisseur ;
- à l'aide d'un curomètre RAPRA® à aiguille vibrante commercialisé par RAPRA Technology Ltd., qui mesure l'atténuation de l'amplitude de vibration de l'aiguille due aux augmentations de viscosité et de module élastique de l'élastomère pendant sa réticulation
(l'aiguille en acier est plongée dans la formulation, la longueur immergée de l'aiguille étant d'environ 5mm, puis animée d'un mouvement de vibration vertical transmis par un vibreur électrodynamique ; la résistance au mouvement mesurée pendant la réticulation de l'élastomère est exprimée en mV);
et comparée à celle de la composition élastomère exempte dudit système accélérateur (appelé "témoin").

### Temps nécessaire au démoulage

On constate que le temps nécessaire au démoulage de la composition élastomère :
. CAF Rhodorseal® 5942 "témoin" est de 240 h pour un joint de 10mm d'épaisseur ;
. CAF Rhodorseal® 5942 accéléré par le système de l'exemple 1 est de 24h pour un joint de 10mm d'épaisseur ;
. CAF Rhodorseal® 5942 accéléré par le système de l'exemple 5 ou 6 est inférieur à 24h pour un joint de 10mm d'épaisseur ;
. CAF Rhodorseal® 5761 "témoin" est de 130 h pour un joint de 10mm d'épaisseur ;
. CAF Rhodorseal® 5761 accéléré par le système de l'exemple 14 est de 6h pour un joint de 10mm d'épaisseur ; la dureté Shore A est de 44 (face air ) et 43 (face confinée) ;
. Mastic Rhodorsil® 3B "témoin" est de 40 h pour un joint de 6mm d'épaisseur ;
. Mastic Rhodorsil® 3B accéléré par le système de l'exemple 15 est de 15h pour un joint de 6mm d'épaisseur.

### Evolution de la dureté

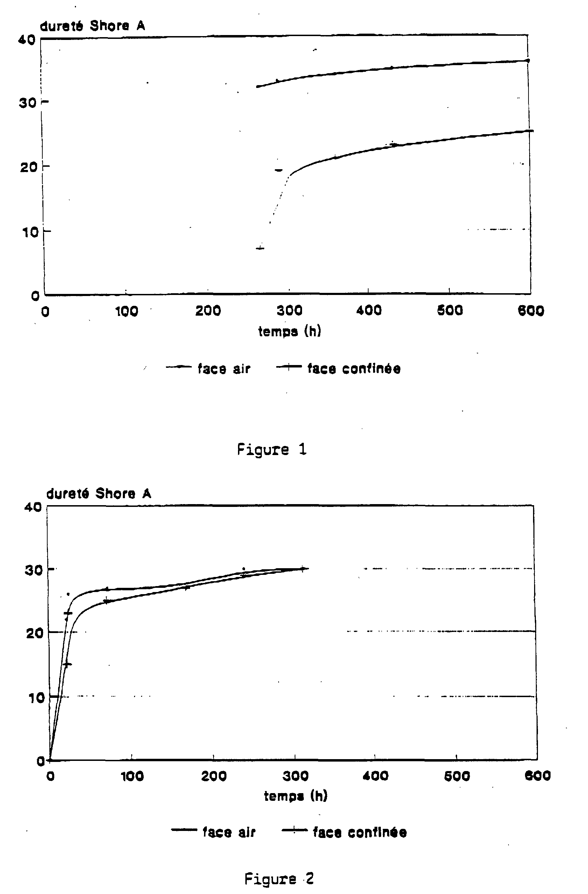

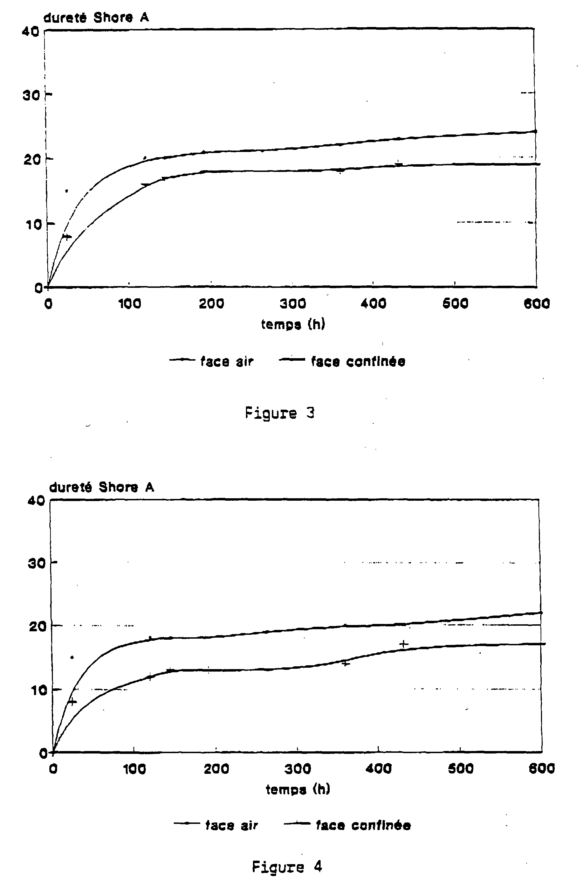

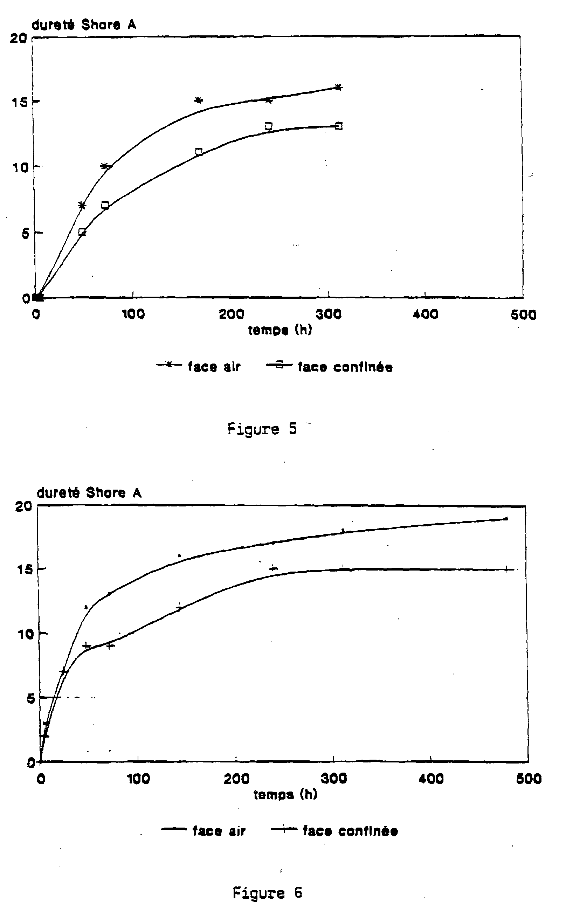

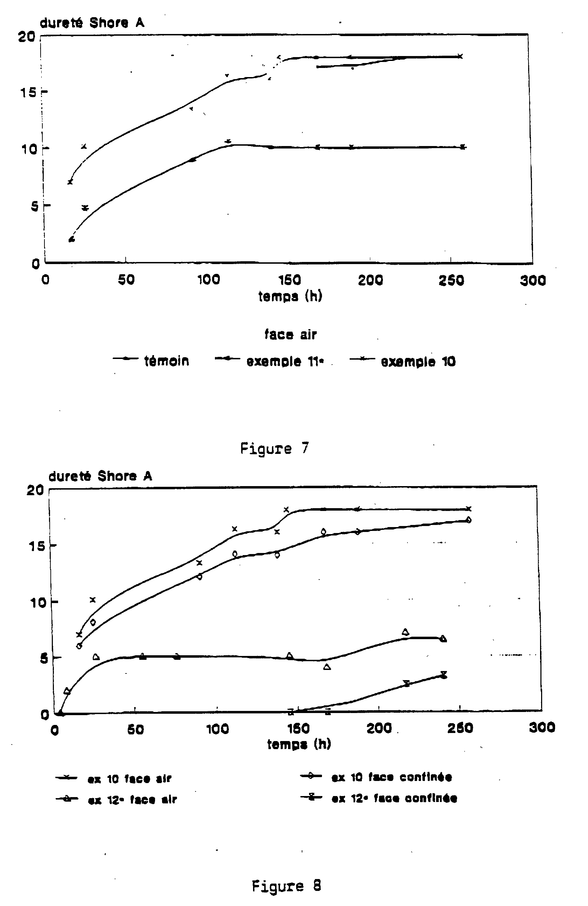

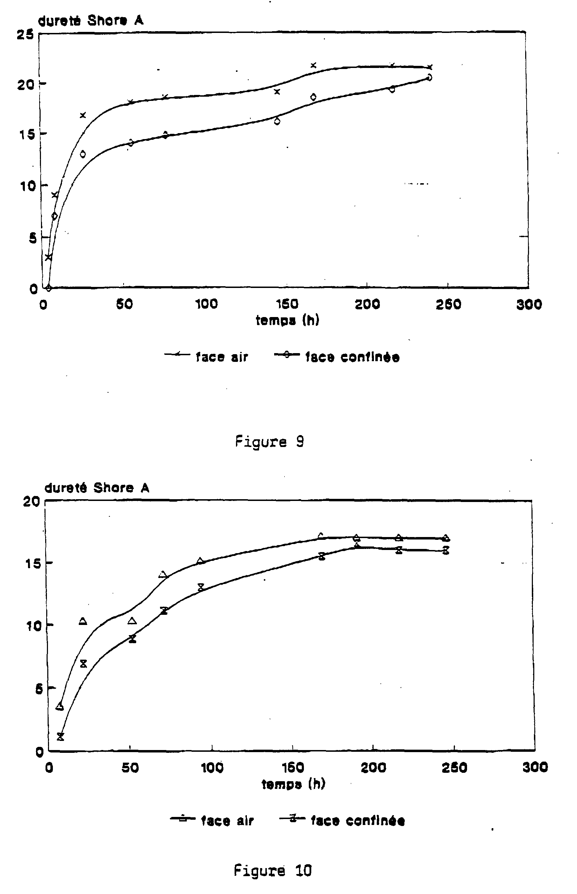

Les figures 1 à 10 jointes représentent l'évolution de la dureté de la composition élastomère choisie accélérée par un système des exemples 1 à 9, selon la corrélation suivante :

| figure | composition élastomère | système accélérateur de I' |
|---|---|---|
| fig. 1 | CAF Rhodorseal® 5942 "témoin" | |
| fig. 2 | CAF Rhodorseal® 5942 | exemple 1 |
| fig. 3 | CAF Rhodorseal® 5942 | exemple 5 |
| fig. 4 | CAF Rhodorseal® 5942 | example 6 |
| fig. 5 | CAF Rhodorseal® 5942 | exemple 8* (eau libre) |
| (la réticulation est accélérée, mais le produit final reste collant et mou) | | |
| fig. 6 | CAF Rhodorseal® 5942 | exemple 9* (eau libre + cata.) |
| (l'élastomère final reste collant et mou ; la dureté reste bien inférieure à celle de l'élastomère "témoin") | | |
| fig. 7 | Mastic Rhodorsil® 6B "témoin" | |
| | Mastic Rhodorsil® 6B | exemple 10 |
| | Mastic Rhodorsil® 6B | exemple 11* (sans cata.) |
| fig. 8 | Mastic Rhodorsil® 6B | exemple 10 |
| | Mastic Rhodorsil® 6B | exemple 12* (hydrogel + cata) |
| fig. 9 | Mastic Rhodorsil® N8 | exemple 13 |
| fig. 10 | Mastic Rhodorsil® N8 | exemple3 |
| | | après 8 mois de stockage |

### Mesure au curomètre

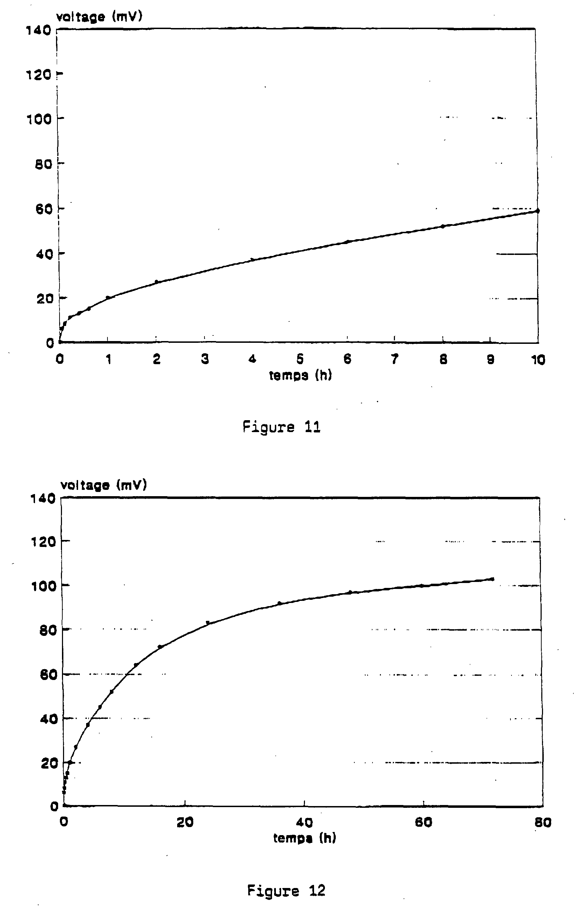

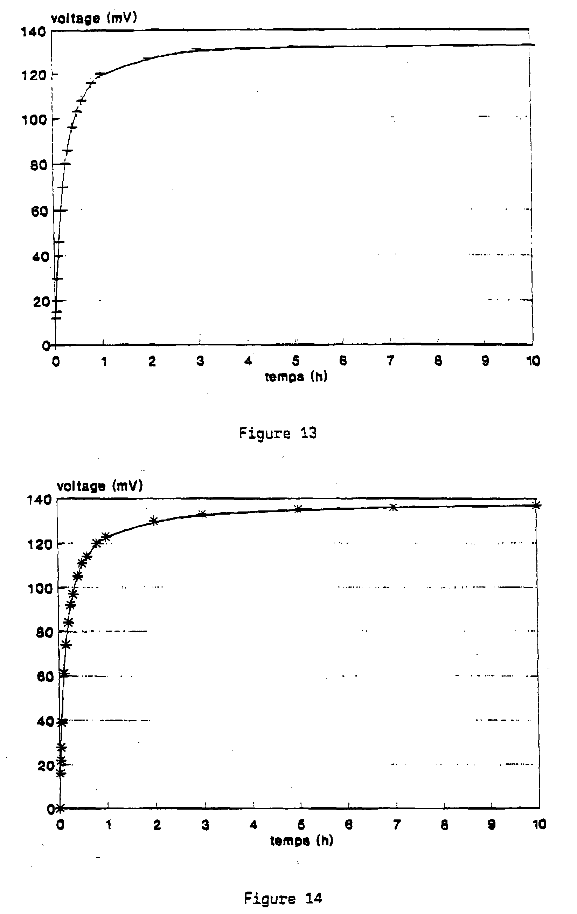

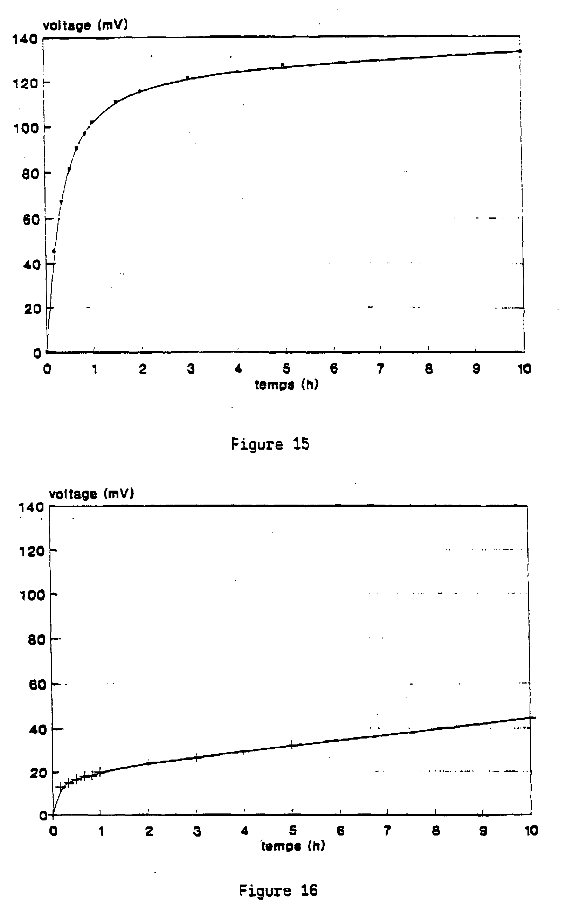

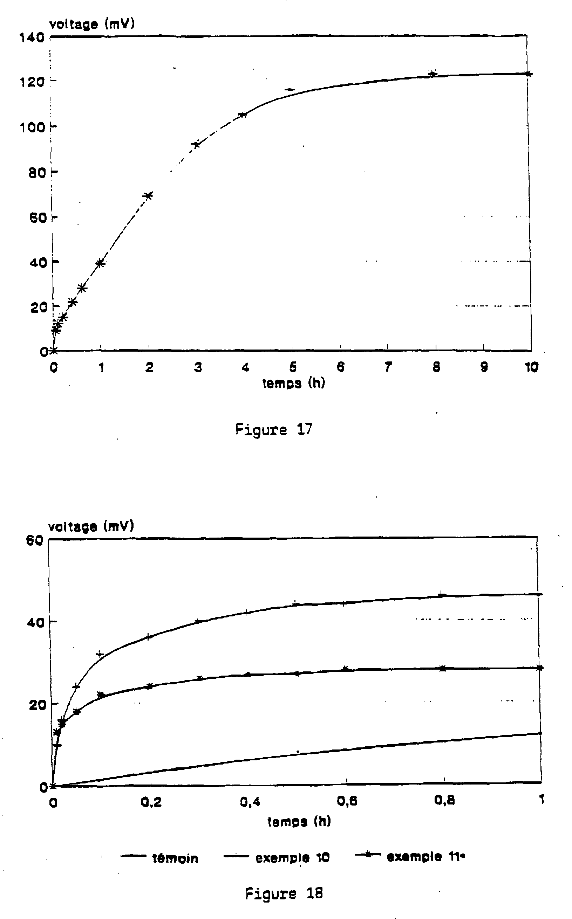

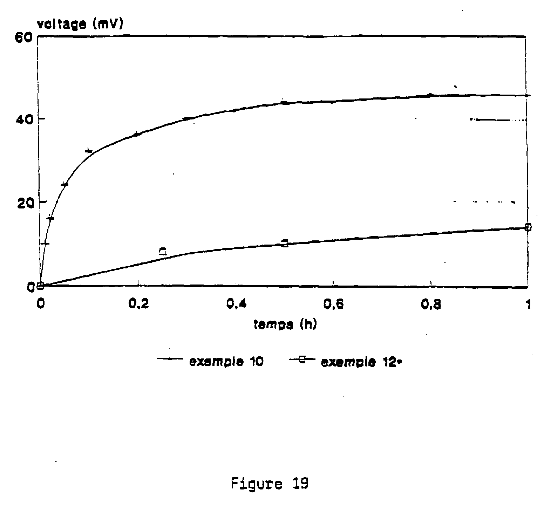

Les figures 11 à 19 jointes représentent l'évolution de la résistance au mouvement de la composition élastomère choisie accélérée par un système des exemples 2 à 12, selon la corrélation suivante :

| figure | composition élastomère | système accélérateur de l' |
|---|---|---|
| fig. 11-12 | CAF Rhodorseal® 5942 "témoin" | |
| fig. 13 | CAF Rhodorseal® 5942 | exemple 2 |
| fig. 14 | CAF Rhodorseal® 5942 | exemple 3 |
| fig. 15 | CAF Rhodorseal® 5942 | exemple 4 |
| fig. 16 | CAF Rhodorseal® 5942 | exemple 7* (sans E) |
| (aucune accélération n'est constatée par rapport au témoin) | | |
| fig. 17 | CAF Rhodorseal® 5942 | exemple 1 |
| fig. 18 | Mastic Rhodorsil® 6B "témoin" | |
| | Mastic Rhodorsil® 6B | exemple 10 |
| | Mastic Rhodorsil® 6B | exemple 11* (sans cata.) |
| fig. 19 | Mastic Rhodorsil® 6B | exemple 10 |
| | Mastic Rhodorsil® 6B | exemple 12* (hydrogel + cata) |

Des mesures réalisées à l'aide des mêmes systèmes accélérateurs stockés pendant huit mois donnent des résultats qui ne sont pas notablement différents de ceux obtenus à l'aide des systèmes frais.

**TABLEAU 1**

| Exemple | 1 | 2 | 3 | 4 | 5 | 6 | 7* | 8* | 9* |
|---|---|---|---|---|---|---|---|---|---|
| composé minéral E | | | | | | | | | |
| (% en poids) | | | | | | | | | |
| . Na₂B₄O₇,10H₂O | 15 | | | | | | | | |
| . TM 12% | | 36 | | | | | | | |
| . TM 22% | | | 31 | | | | | | |
| . gel de silice | | | | 31 | | | | | |
| . Na₂HPO₄,12H₂O | | | | | 11 | | | | |
| . Na₂CO₃,10H₂O | | | | | | 10,5 | | | |
| eau libre | | | | | | | | | |
| (% en poids) | | | | | | | | 7 | 7 |
| diluant silicone | | | | | | | | | |
| (% en poids) | | | | | | | | | |
| . 47 V 30000 | 47 | | | | 86 | 86,5 | 97 | 89 | 88 |
| . 47 V 100 | | 61 | 66 | 66 | | | | | |
| . 48 V 3500 | | | | | | | | | |
| silice | | | | | | | | | |
| (% en poids) | 2 | 2 | 2 | 2 | 2 | 2 | 2 | 4 | 4 |
| carbonate de Ca | | | | | | | | | |
| (% en poids) | 35 | | | | | | | | |
| catalyseur | | | | | | | | | |
| (% en poids) | | | | | | | | | |
| . DLDOctSn | 1 | 1 | 1 | 1 | 1 | 1 | 1 | 0 | 1 |

| | | | | | | | | | |
|---|---|---|---|---|---|---|---|---|---|
| * exemples comparatifs | | | | | | | | | |

**TABLEAU 2**

| Exemple | 10 | 11* | 12* | 13 | 14 | 15 |
|---|---|---|---|---|---|---|
| composé minéral E (% en poids) | | | | | | |
| . Na₂B₄O₇,10H₂O | | | | 15 | 14,8 | 21 |
| . TM 12% | | | | | | |
| . TM 22% | 32 | 32 | | | | |
| . gel de silice | | | | | | |
| . Na₂HPO₄,12H₂O | | | | | | |
| . Na₂CO₃,10H₂O | | | | | | |
| Aqua Keep® (% en poids) | | | 0,1 | | | |
| eau libre (% en poids) | | | 7 | | | |
| diluant silicone (% en poids) | | | | | | |
| . 47 V 30000 | | | 87,9 | | 82,9 | 76,3 |
| . 47 V 100 | | | | | | |
| . 48 V 3500 | 65 | 68 | | 82 | | |
| silice (% en poids) | | | 4 | | 2,5 | 2,5 |
| catalyseur (% en poids) | | | | | | |
| . DLDOctSn | 3 | 0 | 1 | | | |
| . DLDBuSn | | | | 3 | 0,8 | |
| . titanate de Bu | | | | | | 0,2 |

| | | | | | | |
|---|---|---|---|---|---|---|
| * exemples comparatifs | | | | | | |

## Revendications

1. Système accélérateur de réticulation à froid de polymères durcissant à l'humidité par hydrolyse/condensation **caractérisé en ce qu'**il comprend :
- (C) x parties en poids d'un catalyseur de réticulation desdits polymères par polycondensation, x allant de 0,01 à 10, ledit catalyseur étant pris dans le groupe formé par : les sels d'organoétain d'acides carboxyliques, les produits de réaction des sels d'organoétain d'acide carboxyliques avec les esters titaniques, les chélates d'étain, les esters titaniques et zirconiques et les octoates d'étain, zinc ou plomb ;
- (E) Y parties en poids d'au moins un composé minéral solide contenant une quantité y d'eau sous forme d'eau d'hydratation et/ou adsorbée par condensation capillaire, cette quantité y allant de 0,5 à 40 parties en poids, et pouvant représenter jusqu'à 70 % du poids dudit composé minéral solide, ledit composé minéral solide étant pris dans le groupe formé par : un aluminosilicate cristallin hydraté de métal alcalin ou alcalino-terreux ; un gel de silice hydraté ; un sel minéral hydraté contenant de l'eau de cristallisation consistant dans Na₂B₄O₇, 10 H₂O contenant 47 % en poids d'eau, Na₂HPO₄, 12 H₂O contenant 60 % en poids d'eau et Na₂CO₃, 10 H₂O contenant 63 % d'eau ; et un mélange de ces composés minéraux solides ;
- (F) z parties en poids de charges, z allant de 0 à 50 ;
- (D) 100 -(x + Y + z) parties en poids d'un diluant ou d'un solvant dudit catalyseur
(C), diluant ou solvant présentant une viscosité dynamique à 25°C de l'ordre de 50 à 200.000 mPa.s;
les quantités respectives des quatre constituants (C), (E), (F) et (D) étant telles que le système obtenu se présente sous forme d'une pâte manipulable.

2. Système accélérateur selon la revendication 1) **caractérisé en ce que** :
- x va de 0,1 à 5 ;
- y va de 3 à 20 ;
- z va de 1 à 30.

3. Système accélérateur selon la revendications 1) ou 2) **caractérisé en ce que** le diluant ou solvant (D) est un α, ω-bis(triorganosiloxy)-polydiorganosiloxane, un hydrocarbure aliphatique, cycloaliphatique, aromatique, halogéné ou non, une cétone aliphatique ou cycloaliphatique, un ester.

4. Système accélérateur selon l'une quelconque des revendications 1) à 3) **caractérisé en ce que** la charge (F) est de la silice.

5. Utilisation du système accélérateur faisant l'objet de l'une quelconque des revendications 1) à 4) pour l'accélération de compositions silicones durcissant à l'humidité de l'air, comprenant en poids :
- (H) 100 parties d'un α, ω -di(hydroxy)diorganopolysiloxane, de viscosité dynamique de l'ordre de 500 à 500 000 mPa.s à 25°C, constitué d'une succession de motifs diorganopolysiloxy de formule R₂SiO, formule dans laquelle les symboles R, identiques ou différents, représentent des radicaux alcoyles, alcényles ou aryles contenant de 1 à 8 atomes de carbone,
- ( R) de 2 à 10 parties en poids d'au moins un agent réticulant de formule R Si X₃ ou Si X₄, où R a la définition donnée ci-dessus et X représente un groupe hydrolysable ;
- (C') de 0,005 à 0,5 partie en poids d'un catalyseur de réticulation par polycondensation ayant la même définition que celle du catalyseur ( C) donnée supra ;
- (F') de 0 à 200 parties en poids de charges.

6. Utilisation selon la revendication 5) du système accélérateur faisant l'objet de l'une quelconque des revendications 1) à 4) pour l'accélération de compositions silicones durcissant à l'humidité de l'air dans lesquelles l'agent réticulant ( R) est un alcoxysilane ou un cétiminoxysilane.

7. Utilisation pour l'accélération de compositions silicones durcissant à l'humidité de l'air selon la revendication 5) ou 6) du système accélérateur faisant l'objet de l'une quelconque des revendications 1) à 4) en quantité telle que la quantité d'eau présente dans la composition finale soit de l'ordre de 0,1 à 4 % en poids.

## Patentansprüche

1. Beschleunigersystem für die Vernetzung in der Kälte von Polymeren, aushärtend an der Feuchtigkeit durch Hydrolyse/Kondensation, **dadurch gekennzeichnet, dass** es umfasst:
- (C) x Gewichtsteile eines Katalysators für die Vernetzung besagter Polymere durch Polykondensation, wobei x von 0,01 bis 10 geht und besagter Katalysator aus der Gruppe entnommen ist, die gebildet wird von: den zinnorganischen Salzen von Carbonsäuren, den Produkten der Reaktion der zinnorganischen Salze von Carbonsäuren mit den Titan - estern, den Zinnchelaten, den Titan(IV)- und Zirkoniumestern und den Zinn-, Zink- oder Bleioctoaten;
- (E) Y Gewichtsteile wenigstens einer festen mineralischen Verbindung, enthaltend eine Menge y an Wasser in Form von Hydratwasser und/oder durch Kapillarkondensation adsorbiertem Wasser, wobei diese Menge y von 0,5 bis 40 Gewichtsteile geht und bis zu 70% des Gewichts besagter festen mineralischen Verbindung darstellen kann, wobei besagte feste mineralische Verbindung aus der Gruppe entnommen ist, die gebildet wird von: einem wasserhaltigen kristallinen Alkali- oder Erdalkalimetall-aluminosilikat; einem wasserhaltigen Kieselgel; einem wasserhaltigen mineralischen Salz, das Kristallwasser enthält, bestehend aus Na₂B₄O₇·10H₂O mit 47 Gew.-% Wasser, Na₂HPO₄·12H₂O mit 60 Gew.-% Wasser und Na₂CO₃·10H₂O mit 63% Wasser; und einem Gemisch dieser festen mineralischen Verbindungen;
- (F) z Gewichtsteile Füllstoffe, wobei z von 0 bis 50 geht;
- (D) 100 - (x + Y + z) Gewichtsteile eines Verdünnungsmittels oder eines Lösungsmittels besagten Katalysators (C), wobei das Verdünnungsmittel oder Lösungsmittel eine dynamische Viskosität bei 25°C in der Größenordnung von 50 bis 200.000 mPa·s aufweist;
wobei die jeweiligen Mengen der vier Bestandteile (C), (E), (F) und (D) so sind, dass das erhaltene System in Form einer handhabbaren Paste vorliegt.

2. Beschleunigersystem gemäß Anspruch 1, **dadurch gekennzeichnet, dass**:
- x von 0,1 bis 5 geht;
- y von 3 bis 20 geht;
- z von 1 bis 30 geht.

3. Beschleunigersystem gemäß den Ansprüchen 1 oder 2, **dadurch gekennzeichnet, dass** das Verdünnungsmittel oder Lösungsmittel (D) ein α,ω-Bis(triorganosiloxy)-polydiorganosiloxan, ein aliphatischer, cycloaliphatischer, aromatischer, halogenierter oder nicht halogenierter Kohlenwasserstoff, ein aliphatisches oder cycloaliphatisches Keton, ein Ester ist.

4. Beschleunigersystem gemäß einem der Ansprüche 1 bis 3, **dadurch gekennzeichnet, dass** der Füllstoff (F) Siliciumdioxid ist.

5. Verwendung des Beschleunigersystems, das den Gegenstand eines der Ansprüche 1 bis 4 bildet, für die Beschleunigung von Siliconzusammensetzungen, aushärtend an der Luftfeuchtigkeit, umfassend in Gewicht:
- (H) 100 Teile eines α,ω-Di(hydroxy)diorganopolysiloxans mit einer dynamischen Viskosität in der Größenordnung von 500 bis 500 000 mPa·s bei 25°C, bestehend aus einer Abfolge von Diorganopolysiloxyeinheiten der Formel R₂SiO,
wobei in dieser Formel die Symbole R, die gleich oder verschieden sind, Alkyl-, Alkenyl oder Arylreste mit 1 bis 8 Kohlenstoffatomen darstellen,
- (R) 2 bis 10 Gewichtsteile wenigstens eines Vernetzungsmittels der Formel RSiX₃ oder SiX₄, worin R die oben angegebene Definition hat und X eine hydrolysierbare Gruppe darstellt;
- (C') 0,005 bis 0,5 Gewichtsteile eines Katalysators für die Vernetzung durch Polykondensation mit derselben, oben angegebenen Definition wie derjenigen des Katalysators (C);
- (F') 0 bis 200 Gewichtsteile Füllstoffe.

6. Verwendung gemäß Anspruch 5 des Beschleunigersystems, das den Gegenstand eines der Ansprüche 1 bis 4 bildet, für die Beschleunigung von Siliconzusammensetzungen, aushärtend an der Luftfeuchtigkeit, in denen das Vernetzungsmittel (R) ein Alkoxysilan oder ein Ketiminoxysilan ist.

7. Verwendung für die Beschleunigung von Siliconzusammensetzungen, aushärtend an der Luftfeuchtigkeit, gemäß Anspruch 5 oder 6 des Beschleunigersystems, das den Gegenstand eines der Ansprüche 1 bis 4 bildet, in einer solchen Menge, dass die in der Endzusammensetzung vorhandene Wassermenge in der Größenordnung von 0,1 bis 4 Gew.-% liegt.

## Claims

1. Accelerator system for the room-temperature vulcanization of moisture-curable polymers by hydrolysis/condensation, **characterized in that** it comprises:
- (C) x parts by weight of a catalyst for vulcanizing the said polymers by polycondensation, x ranging from 0.01 to 10, the said catalyst being taken from the group formed by: organotin salts of carboxylic acids, the products of reaction of organotin salts of carboxylic acids with titanium esters, tin chelates, titanium and zirconium esters and tin, zinc or lead octoates;
- (E) Y parts by weight of at least one solid mineral compound containing an amount y of water in the form of water of hydration and/or adsorbed by capillary condensation, this amount y ranging from 0.5 to 40 parts by weight, and possibly representing up to 70% of the weight of the said solid mineral compound, the said solid mineral compound being taken from the group formed by: a crystalline aluminosilicate hydrate of an alkali metal or of an alkalineearth metal; a hydrated silica gel; a hydrated mineral salt containing water of crystallization, consisting of Na₂B₄O₇ · 10H₂O containing 47% by weight of water, Na₂HPO₄ · 12H₂O containing 60% by weight of water and Na₂CO₃ · 10H₂O containing 63% water; and a mixture of these solid mineral compounds;
- (F) z parts by weight of fillers, z ranging from 0 to 50;
- (D) 100 - (x + Y + z) parts by weight of a diluent or a solvent for the said catalyst (C), the diluent or solvent having a dynamic viscosity at 25°C of about from 50 to 200 000 mPa.s;
the respective amounts of the four constituents (C), (E), (F) and (D) being such that the system obtained is in the form of a workable paste.

2. Accelerator system according to Claim 1, **characterized in that**:
- x ranges from 0.1 to 5;
- y ranges from 3 to 20;
- z ranges from 1 to 30.

3. Accelerator system according to Claim 1 or 2, **characterized in that** the diluent or solvent (D) is an α,ω-bis(triorganosiloxy)polydiorganosiloxane, an aliphatic, cycloaliphatic, aromatic, halogenated or non-halogenated hydrocarbon, an aliphatic or cycloaliphatic ketone or an ester.

4. Accelerator system according to any one of Claims 1 to 3, **characterized in that** the filler (F) is silica.

5. Use of the accelerator system forming the subject of any one of Claims 1 to 4, for the acceleration of silicone compositions which are curable by atmospheric moisture, comprising, by weight:
- (H) 100 parts of an α,ω-di(hydroxy)diorganopolysiloxane, with a dynamic viscosity of about from 500 to 500 000 mPa.s at 25°C, consisting of a succession of diorganopolysiloxy units of formula R₂SiO, in which formula the symbols R, which may be identical or different, represent alkyl, alkenyl or aryl radicals containing from 1 to 8 carbon atoms,
- (R) from 2 to 10 parts by weight of at least one vulcanizing agent of formula RSiX₃ or SiX₄, in which R has the definition given above and X represents a hydrolysable group;
- (C') from 0.005 to 0.5 part by weight of a polycondensation vulcanization catalyst having the same definition as that of the catalyst (C) given above;
- (F') from 0 to 200 parts by weight of fillers.

6. Use according to Claim 5 of the accelerator system forming the subject of any one of Claims 1 to 4, for the acceleration of silicone compositions which are curable by atmospheric moisture, in which the vulcanizing agent (R) is an alkoxysilane or a ketiminoxysilane.

7. Use, for the acceleration of silicone compositions which are curable by atmospheric moisture, according to Claim 5 or 6, of the accelerator system forming the subject of any one of Claims 1 to 4 in an amount such that the amount of water present in the final composition is from about 0.1% to 4% by weight.
